# EUROPÄISCHE PATENTSCHRIFT

(11) **EP 2 836 462 B1**
(45) Veröffentlichungstag und Bekanntmachung des Hinweises auf die Patenterteilung: **20.10.2021**
(21) Anmeldenummer: 13716271.5
(22) Anmeldetag: 10.04.2013
(51) Int. Cl.: C01F 7/06

(54) **VERFAHREN UND VORRICHTUNG ZUR WERTSTOFFGEWINNUNG AUS EINEM BAUXITRÜCKSTAND**
PROCESS AND APPARATUS FOR OBTAINING POTENTIAL RECYCLABLES FROM A BAUXITE RESIDUE
PROCÉDÉ ET DISPOSITIF POUR L'OBTENTION DE MATIÈRES VALORISABLES À PARTIR D'UN RÉSIDU DE BAUXITE

(30) Priorität: 12.04.2012 WO PCT/EP2012/056696
(43) Veröffentlichungstag der Anmeldung: 18.02.2015
(73) Patentinhaber: EuroAtlantic Capital LLC, Wilmington, DE 19801 (US)
(72) Erfinder: KRAUSE, Eberhard, 79427 Eschbach (DE); SCHMIDT-BISCHOFFSHAUSEN, Horst, 85579 Neubiberg bei München (DE)
(74) Vertreter: DTS Patent- und Rechtsanwälte Schnekenbühl und Partner mbB
(86) Internationale Anmeldenummer: PCT/EP2013/057493
(87) Internationale Veröffentlichungsnummer: WO 2013/153115

(56) Entgegenhaltungen:
- EP-A1- 2 361 681
- WO-A1-2008/144838
- US-B1- 6 248 302
- PIGA L ET AL: "RECOVERING METALS FROM RED MUD GENERATED DURING ALUMINA PRODUCTION", J O M, SPRINGER NEW YORK LLC, UNITED STATES, Bd. 45, Nr. 11, 1. November 1993 (1993-11-01), Seiten 54-59, XP000415000, ISSN: 1047-4838

## Beschreibung

Die Erfindung betrifft ein Verfahren zur Wertstoffgewinnung aus einem Bauxitrückstand, welcher durch das Bayer-Verfahren erhältlich ist. Die Erfindung betrifft weiterhin eine Vorrichtung zur Durchführung des Verfahrens.

Bei der Alumina-Produktion (Vorstufe für die Aluminium-Schmelzanlage) mit Hilfe des Bayer-Verfahrens wird Aluminium als Natriumaluminat mit Hilfe von Natronlauge aus fein gemahlenem Bauxit herausgelöst. Aus der vom Bauxitrückstand abgetrennten Natriumaluminat-Lösung wird nach Animpfen mit Kristallisationskeimen reines Al(OH)₃ (Gibbsit) gefällt, anschließend zu Aluminiumoxid kalziniert und schließlich durch Elektrolyse metallisches Aluminium gewonnen. Der verbleibende Bauxitrückstand, der auch als "Bauxite Residue" (BR) bezeichnet wird, besteht chemisch betrachtet hauptsächlich aus Eisenoxiden bzw. -hydroxiden, Titanoxiden, Aluminiumoxidresten, Silikaten, Kalziumoxid, Natriumoxid und Restnatronlauge. Wegen seiner durch Eisen(III)-oxid hervorgerufenen roten Farbe wird dieser Bauxitrückstand auch Rotschlamm ("red mud") genannt.

Zu jeder produzierten Tonne Aluminium fallen je nach Qualität des verwendeten Bauxits 1 bis 3 Tonnen Bauxitrückstand als nicht vermeidbarer Begleiter an. Jedes Jahr entstehen daher viele Millionen Tonnen an Bauxitrückstand, die zusammen mit den bereits vorhandenen Mengen ein ernsthaftes Umwelt- und Entsorgungsproblem darstellen. Das Hauptproblem ist die aufgrund seines Natronlaugengehalts hohe Alkalität des Bauxitrückstands mit pH-Werten von 13 bis 14. Darüber hinaus stellen toxisch wirkende Aluminium-Ionen zusammen mit Eisen-Verbindungen eine große Gefahr für das Grundwasser dar und erschweren eine umweltgerechte Deponierung zusätzlich.

Die Entsorgung des Bauxitrückstands erfolgt daher im Wesentlichen durch Einlagerung in abgedichteten Deponien. Die am Boden der Deponie austretende Natronlauge wird bei einigen Deponien gesammelt und in den Bayer-Prozess rückgeführt. In der Regel wird die Natronlauge jedoch einfach abgesaugt und als Abwasser entsorgt oder tritt in schlimmsten Fällen sogar unkontrolliert aus. Diese Form der Lagerung ist jedoch teuer und aufwändig, da große Deponieflächen und -anlagen benötigt werden und hohe Kosten für den Transport des Bauxitrückstands anfallen. Zudem sind die durch die Deponierung entstehenden Langzeitkosten nur schwer kalkulierbar und stellen ein zusätzliches wirtschaftliches Problem dar, weil zumindest in Europa Rückstellungen für eine spätere Entsorgung gebildet werden müssen. Derzeit existieren Deponiebestände mit etwa 2,5 Mrd. Tonnen Bauxitrückstand. Zu diesen kommen jährlich etwa 80-120 Mio. Tonnen Bauxitrückstand dazu.

Die Deponierungskosten könnten verringert werden, wenn der bislang als Abfallprodukt betrachtete Bauxitrückstand in nutzbare Wertstoffe umgewandelt bzw. zur Gewinnung von Wertstoffen verwendet werden könnte. Insbesondere ist die Abtrennung der Eisenbestandteile von großem Interesse. Ziel eines jeden Verfahrens sollte sein, dass die erhaltenen Wertstoffe ohne aufwendige Nachbearbeitung weiterverwendbar bzw. vermarktbar sind.

Seit Beginn des großtechnischen Einsatzes des Bayer-Verfahrens hat es nicht an Versuchen gefehlt, die wertvollen Inhaltsstoffe wie Eisen, Titan, Vanadium oder seltene Erden aus dem Bauxitrückstand zu extrahieren und einer neuen Verwendung zuzuführen. Nach wie vor wird der Bauxitrückstand jedoch hauptsächlich in großen Setzteichen als Schlamm deponiert oder nach Teilentwässerung in Kammerfilterpressen in einer Art Haufwerk (Miete) aufgeschichtet, was als so genanntes "dry stacking" bekannt ist.

Aus der WO 2008/144838 A1 ist ein Verfahren zur Behandlung von Rückständen aus einem Bayer-Prozess bekannt. Das Verfahren umfasst die Schritte des Aussetzens des Rückstands einer Kavitation, wodurch mindestens ein Teil der Zielsubstanz von dem Rest befreit wird. Anschließend wird der Rest einem Trennschritt zugeführt, um die Zielsubstanz vom Rest zu trennen und zu entfernen. Die Kavitation kann durch ein Hochleistungs-Ultraschallgerät verursacht werden, und die Trennung kann durch einen nassen Hochintensitäts-Magnetabscheider (WHIM) erfolgen, um eine eisenreiche Komponente zu trennen.

Der Erfindung liegt die Aufgabe zugrunde, ein Verfahren zu schaffen, welches die nasschemische Abtrennung wenigstens eines Teils der eisenhaltigen Bestandteile im Bauxitrückstand als Wertstoffe ermöglicht. Eine weitere Aufgabe der Erfindung ist es, eine Vorrichtung zur Durchführung eines derartigen Verfahrens zu schaffen.

Die Aufgaben werden erfindungsgemäß durch ein Verfahren gemäß Anspruch 1 zur Wertstoffgewinnung aus einem Bauxitrückstand sowie durch eine Vorrichtung gemäß Anspruch 15 zur Durchführung dieses Verfahrens gelöst. Vorteilhafte Ausgestaltungen mit zweckmäßigen Weiterbildungen der Erfindung sind in den Unteransprüchen angegeben, wobei vorteilhafte Ausgestaltungen des Verfahrens als vorteilhafte Ausgestaltungen der Vorrichtung anzusehen sind.

Ein erster Aspekt der Erfindung betrifft ein Verfahren zur Wertstoffgewinnung aus einem Bauxitrückstand aus dem Bayer-Verfahren. Erfindungsgemäß wird dabei die nasschemische Abtrennung wenigstens eines Teils der eisenhaltigen Bestandteile des Bauxitrückstands dadurch ermöglicht, dass das Verfahren zumindest die Schritte a) Bereitstellen einer wässrigen Suspension des Bauxitrückstands, b) Einstellen eines pH-Werts der Suspension auf einen Wert zwischen 7,2 und 12,2 und Zugeben wenigstens eines Dispergiermittels, c) zumindest teilweises Desagglomerieren suspendierter Mineralagglomerate des Bauxitrückstands, wobei die Mineralagglomerate in Schritt c) durch Erzeugung von Kavitation desagglomeriert werden, und d) Auftrennen des resultierenden Gemischs in eine eisenreiche Fraktion und in wenigstens eine weitere, vorzugsweise silikatreiche Fraktion umfasst. Alternativ kann vorgesehen sein, dass das Verfahren ausschließlich aus diesen Schritten besteht. Bauxitrückstand (oder Rotschlamm) besitzt einen hohen Anteil an sehr kleinen Partikeln mit Durchmessern zwischen etwa 20 nm und 1000 nm und zeigt daher Eigenschaften eines Kolloids. Kolloide sind komplexe Systeme, in denen wie im Fall des Bauxitrückstands verschiedene agglomerierte Partikel in einer Flüssigkeit, nämlich wässriger Natronlauge, suspendiert/dispergiert sind. Zwischen den Partikeln wirken elektrostatische und sterische Bindungskräfte, die im Normalfall eine einfache Trennung der einzelnen Mineralpartikel bzw. Mineral-Fraktionen voneinander verhindern und darüber hinaus auch die chemische Reaktivität der Partikel beeinflussen. Bauxitrückstand enthält zudem im höheren Prozentbereich Zeolithe, welche als Ionenaustauscher fungieren und beispielsweise das einfache Auswaschen der RestNatronlauge aus dem Bayer-Aufschluss verhindern. Charakteristischerweise verhält sich eine Bauxitrückstand-Suspension wie eine nicht-newtonsche Flüssigkeit und zeigt thixotropes Verhalten. Die Agglomeration verschiedener Mineralteilchen wie beispielsweise von Silikatbestandteilen und Eisenmineralien verhindert bekanntermaßen eine einfache Auftrennung durch Gravitation oder mit Hilfe von Magnetfeldern, weil die nanoskaligen Eisenpartikel über mechanische, ionische und elektrostatische Kräfte fest mit den anderen Mineralbestandteilen verbunden sind. Eine einfache Abtrennung würde idealerweise kugelförmige Partikel voraussetzen, um entsprechende Abstoßungskräfte realisieren zu können. Im Bauxitrückstand finden sich jedoch praktisch keine kugelförmigen Partikel, da Silikate in der Regel plättchenförmig ausgebildet sind und die anderen Mineralbestandteile chaotische Formen ohne regelmäßige Geometrien besitzen. Dadurch wird der Zugang von oberflächenverändernden Chemikalien zusätzlich erschwert. Die elektrostatischen Kräfte können zudem je nach Partikelgeometrie und ―zusammensetzung unterschiedlich stark sein. Tonpartikel sind in fast allen Fällen negativ geladen.

Eine Abtrennung von Mineralkomponenten aus einer solchen Suspension erfordert daher zunächst die Aufhebung der Bindungskräfte zwischen den agglomerierten Mineralbestandteilen, das heißt eine Desagglomeration. Weiterhin muss sichergestellt werden, dass die desagglomerierten kolloidalen Partikel eines bestimmten Minerals nicht wieder in unerwünschter Weise mit andersartigen Partikeln reagglomerieren, wodurch letztlich wieder der Ausgangszustand eintreten würde. Andererseits sollen chemisch gleich oder ähnlich zusammengesetzte Mineralpartikel konglomerieren, damit sich größere, nicht-kolloidale Agglomerate bilden, die dann in einfacher Weise als angereicherte wertstoffhaltige Fraktion abgetrennt werden können.

Dem erfindungsgemäßen Verfahren liegt die Erkenntnis zugrunde, dass zur technisch einfachen, skalierbaren und nasschemischen Abtrennung wenigstens eines Teils der eisenhaltigen Mineralphasen im Bauxitrückstand diese spezifischen Kolloid-Eigenschaften des Bauxitrückstands berücksichtigt werden müssen. Oberflächenladungen von Partikeln können naturgemäß positiv oder negativ sein. Die Wechselwirkungen der Partikel hängen zudem von der lonenstärke der Suspension ab. Die Erfindung macht es sich vorteilhafter Weise zu Nutze, dass sich die Oberflächenladungen der mineralischen Partikel einer BR-Suspension pH-abhängig verändern lassen. Jede Mineralspezies besitzt dabei für einen bestimmten pH-Wert eine ausgeglichene Oberflächenladung, das heißt dass sich die positiven und negativen Ladungen ausgleichen und der Partikel insgesamt elektrisch neutral ist. Der entsprechende pH-Wert kann daher auch als isoelektrischer Punkt oder als Point of Zero Charge (PZC) bezeichnet werden. Um die Eisenverbindungen des BR möglichst quantitativ von den übrigen Mineralbestandteilen abzutrennen, muss ihre vorhandene Oberflächenladung daher zunächst neutralisiert oder sogar ins Gegenteil verkehrt werden. Daher erfolgt in Schritt b) des erfindungsgemäßen Verfahrens zunächst eine Einstellung des pH-Werts der Bauxitrückstand-Suspension auf einen Wert zwischen 7,2 und 11,4. Unter einem pH-Wert zwischen 7,2 und 12,2 sind im Rahmen der Erfindung pH-Werte von 7,2, 7,3, 7,4, 7,5, 7,6, 7,7, 7,8, 7,9, 8,0, 8,1, 8,2, 8,3, 8,4, 8,5, 8,6, 8,7, 8,8, 8,9, 9,0, 9,1, 9,2, 9,3, 9,4, 9,5, 9,6, 9,7, 9,8, 9,9, 10,0, 10,1, 10,2, 10,3, 10,4, 10,5, 10,6, 10,7, 10,8, 10,9, 11,0, 11,1, 11,2, 11,3, 11,4, 11,5, 11,6, 11,7, 11,8, 11,9, 12,0, 12,1 und 12,2 sowie entsprechende Zwischenwerte wie beispielsweise 9,40, 9,41, 9,42, 9,43, 9,44, 9,45, 9,46, 9,47, 9,48, 9,49, 9,50 usw. zu verstehen. Hierdurch können die Oberflächenladungen eisenhaltiger Partikel in der bereitgestellten Bauxitrückstand-Suspension derart eingestellt werden, dass eine Desagglomerierung der mineralischen Agglomerate überhaupt erst möglich wird. Bei pH-Werten über 12,2 oder unter 7,2 lassen sich die Partikel nicht mehr desagglomerieren, sondern bleiben in Suspension oder verklumpen zu noch größeren Aggregaten. Nach dem Einstellen des pH-Wertes auf einen Wert im Bereich des " Point of Zero Charge", das heißt nach dem Ändern der Oberflächenladung insbesondere der eisenreichen Mineralbestandteile, wird im folgenden Schritt c) dementsprechend eine zumindest teilweise Desagglomerierung der suspendierten Mineralagglomerate des Bauxitrückstands durchgeführt und das resultierende Gemisch schließlich in Schritt d) in eine eisenreiche Fraktion und in wenigstens eine weitere Fraktion aufgetrennt. Bei der weiteren Fraktion handelt es sich bevorzugt um eine silikatreiche Fraktion. Die Mineralagglomerate in Schritt c) werden durch Erzeugung von Kavitation desagglomeriert. Unter Kavitation ist im Rahmen der Erfindung die Bildung und Auflösung von dampfgefüllten Hohlräumen (Dampfblasen) im Suspensionsmittel des Bauxitrückstands zu verstehen. Bei der Kavitation unterscheidet man grundsätzlich zwei Grenzfälle, zwischen denen es fließende Übergangsformen gibt. Bei der Dampfkavitation (harte bzw. transiente) Kavitation enthalten die gebildeten Hohlräume Dampf des umgebenden Wassers. Derartige Hohlräume fallen unter Einwirkung des äußeren Drucks per Blasenimplosion zusammen (mikroskopischer Dampfschlag). Bei der weichen (stabilen) Kavitation treten in der Flüssigkeit gelöste Gase in die gebildeten Kavitäten ein und dämpfen oder verhindern deren Kollaps. Im Zusammenwirken mit dem eingestellten pH-Wert bzw. der modifizierten Oberflächenladung der einzelnen Partikel können somit aneinanderhaftende Partikel desagglomeriert werden, indem Wasser, Wasserdampf oder andere Gase durch Einwirkung der Kavitationskräfte praktisch zwischen die Partikel "geschossen" wird. Der Schritt des Desagglomerierens ist dabei grundsätzlich nicht auf eine bestimmte Methode beschränkt. Vorteilhaft ist aber die Durchführung unter Einsatz spezieller schnelldrehender Rührer, auch Dissolver genannt, von Ultraschallerzeugern oder anderen geeigneten Kavitationserzeugungmitteln. Die Desagglomerierung beruht in allen Fällen auf der Erzeugung von Kavitation in der Suspension, die eine Auftrennung der Partikel durch Beaufschlagung der Partikel mit mechanischen Kräften bewirkt. Die Erfindung macht sich weiterhin in vorteilhafter Weise den vergleichsweise großen Dichteunterschied zwischen den eisenreichen und den sonstigen Mineralbestandteilen des BR zu Nutze. Eisenoxide und -hydroxide besitzen beispielsweise Dichten >5 g/cm³, während Silikate und Titan-Verbindungen Dichten von 2,6 g/cm³ oder weniger aufweisen. Dies führt dazu, dass sich die desagglomerierten eisenhaltigen Partikel zumindest überwiegend von den nicht-eisenhaltigen Partikel abtrennen lassen und mit anderen eisenhaltigen Partikeln reagglomerieren können. Die hierdurch gebildete eisenreiche Fraktion sinkt daher zu Boden und trennt sich alleine durch die Gravitation von wenigstens einer weiteren Fraktion, welche dementsprechend eisenarm bzw. silikatreich ist und im wässrigen Medium suspendiert bzw. dispergiert verbleibt. Die eisenreiche Fraktion kann daher besonders einfach als Wertstoff von der weiteren Fraktion abgetrennt werden. Durch das Abtrennen wird somit als erster Wertstoff ein verhüttungsfähiges Eisenerz mit einem Eisengehalt von bis zu 55% oder mehr erhalten, Dies ist besonders vorteilhaft, da die Vorgabe der Eisenhüttenindustrie zur Annahme eisenhaltiger Ausgangsprodukte bei etwa 50 % bis 55 % Eisengehalt liegt. Die tatsächliche Eisenerzausbeute schwankt naturgemäß in Abhängigkeit von der konkreten Zusammensetzung des Bauxitrückstands innerhalb gewisser Grenzen, beträgt aber selbst bei Bauxitrückständen aus Altdeponien regelmäßig mindestens 45 % oder mehr der Gesamt-Trockenmasse des eingesetzten Bauxitrückstands. Im Rahmen der Erfindung sind Prozentangaben grundsätzlich als Massenprozente zu verstehen, sofern nichts anderes angegeben ist. Als zusätzlicher Wertstoff bzw. zusätzliches Wertstoffgemisch wird die weitere Fraktion erhalten, welche ein Silikat-Material (das heißt ein Gemisch verschiedener Tone) umfasst, das beispielsweise direkt als Dünger oder Bodenverbesserer eingesetzt werden oder weiterverarbeitet werden kann. So entstehen mindestens zwei unterschiedliche Wertstoffe aus der Aufarbeitung des Bauxitrückstands. Mit Hilfe eines Dispergiermittels kann die in Schritt c) erreichte Partikelisolation stabilisiert bzw. aufrechterhalten werden. Somit können einmal freigesetzte Partikel an der Reagglomerierung mit unerwünschten anderen Partikeln gehindert und die Desagglomeration unterstützt werden. Dabei können grundsätzlich sterisch und/oder elektrostatisch wirkende Dispergiermittel vorgesehen sein. Bei der sterischen Stabilisierung sitzen die partikelaffinen Bereiche des Dispergiermittels am Mineralpartikel, während die Reste des Dispergiermittels in das Dispergiermedium hineinragen. Treffen zwei Partikel aufeinander, können sie nicht agglomerieren, weil sie von den Dispergiermitteln auf Abstand gehalten werden. Bei der elektrostatischen Stabilisierung trägt das Dispersionsmittel eine elektrische Ladung. Die Ladung kann grundsätzlich am partikelaffinen und/oder am partikelfernen Ende des Dispergiermittels vorgesehen sein. Hierdurch bilden die geladenen Teile des Dispergiermittels eine Art Schutzhülle um die betreffenden Partikel. Die elektrosterische Stabilisierung kombiniert die Mechanismen der sterischen und der elektrostatischen Stabilisierung. Das erfindungsgemäße Verfahren ist technisch besonders einfach durchführbar und zudem einfach skalierbar. Daher kann das erfindungsgemäße Verfahren beispielsweise unmittelbar im Anschluss an das Bayer-Verfahren durchgeführt werden, indem der anfallende Bauxitrückstand in eine entsprechende Vorrichtung zur Durchführung des erfindungsgemäßen Verfahrens weiter- bzw. eingeleitet wird.

In einer vorteilhaften Ausgestaltung der Erfindung ist vorgesehen, dass in Schritt a) ein Verhältnis von Feststoff zu Flüssigkeit zwischen 1:2 und 1:5, insbesondere ein Verhältnis von 1:2,5 in der Suspension eingestellt wird und/oder dass in Schritt a) ein Bauxitrückstand mit einem Wassergehalt zwischen 20 % und 40 % verwendet wird, wobei der Bauxitrückstand vorzugsweise ein- oder mehrfach gewaschen ist. Unter einem Verhältnis von Feststoff zu Flüssigkeit zwischen 1:2 und 1:5 sind insbesondere Verhältnisse von 1:2,0, 1:2,1, 1:2,2, 1:2,3, 1:2,4, 1:2,5, 1:2,6, 1:2,7, 1:2,8, 1:2,9, 1:3,0, 1:3,1: 1:3,2, 1:3,3, 1:3,4, 1:3,5, 1:3,6, 1:3,7, 1:3,8, 1:3,9, 1:4,0, 1:4,1: 1:4,2, 1:4,3, 1:4,4, 1:4,5, 1:4,6, 1:4,7, 1:4,8, 1:4,9 und 1:5,0 sowie entsprechende Zwischenwerte zu verstehen. Der genannte Verhältnisbereich ermöglicht einerseits eine gute Handhabbarkeit des Bauxitrückstands und verhindert andererseits, dass in Schritt d) unnötig große Flüssigkeitsmengen gehandhabt werden müssen. Ein Verhältnis von 1:2,5 hat sich dabei als besonders vorteilhaft gezeigt. Indem der Bauxitrückstand einen Wassergehalt zwischen 20 % und 40 %, das heißt insbesondere Wassergehalte von 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 % oder 40 % besitzt, kann die Menge an in Schritt a) zuzusetzendem Wasser vorteilhaft verringert werden. Darüber hinaus weist der durch das Bayer-Verfahren erhaltene Bauxitrückstand in der Regel bereits Wassergehalte von 28-35 % auf und kann somit direkt verwendet werden. Indem der Bauxitrückstand ein- oder mehrfach gewaschen ist können insbesondere Natronlauge für das Bayer-Verfahren zurück gewonnen und der pH-Wert des Bauxitrückstands nach Bedarf eingestellt werden. Alternativ oder zusätzlich kann vorgesehen sein, dass eine Dichte der Suspension auf einen Wert zwischen 1,05 g/cm³ und 1,35 g/cm³, insbesondere zwischen 1,07 g/cm³ und 1,30 g/cm³ eingestellt wird. Unter einem Wert zwischen 1,05 g/cm³ und 1,35 g/cm³ sind im Rahmen der Erfindung insbesondere Dichtewerte von 1,05 g/cm³, 1,06 g/cm³, 1,07 g/cm³, 1,08 g/cm³, 1,09 g/cm³, 1,10 g/cm³, 1,11 g/cm³, 1,12 g/cm³, 1,13 g/cm³, 1,14 g/cm³, 1,15 g/cm³, 1,16 g/cm³, 1,17 g/cm³, 1,18 g/cm³, 1,19 g/cm³, 1,20 g/cm³, 1,21 g/cm³, 1,22 g/cm³, 1,23 g/cm³, 1,24 g/cm³, 1,25 g/cm³, 1,26 g/cm³, 1,27 g/cm³, 1,28 g/cm³, 1,29 g/cm³, 1,30 g/cm³, 1,31 g/cm³, 1,32 g/cm³, 1,33 g/cm³, 1,34 g/cm³ oder 1,35 g/cm³ sowie entsprechende Zwischenwerte zu verstehen. Indem die Dichte der Suspension vor und/oder während Schritt c) auf einen Wert im genannten Bereich eingestellt wird, wird eine besonders schnelle und vollständige Desagglomerierung ermöglicht.

Weitere Vorteile ergeben sich, indem die Temperatur der Suspension vor Schritt c), insbesondere in Schritt a), auf einen Wert zwischen 30°C und 70°C eingestellt wird. Hierdurch können die Reaktionszeiten für die anschließende Desagglomerierung vorteilhaft eingestellt werden. Unter einer Temperatur zwischen 30°C und 70°C sind insbesondere Temperaturen von 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C oder 70°C zu verstehen. Beispielsweise beträgt die für Schritt c) erforderliche Zeit bei einer Temperatur von 40°C üblicherweise etwa 20 Minuten, während sie bei Temperaturen über 50°C auf 15 Minuten oder weniger gesenkt werden kann. Darüber hinaus kann ein direkt aus dem Bayer-Verfahren erhaltener Bauxitrückstand üblicherweise bereits eine Temperatur von etwa 70°C haben und kann somit direkt im Rahmen des vorliegenden Verfahrens weiter prozessiert werden. Bei Temperaturen über 70°C ändern sich die Zusammensetzungen mehrerer Hydratverbindungen unter den Mineralien des Bauxitrückstands, wodurch die Desagglomerierung stark erschwert oder sogar verunmöglicht wird. Dabei kann grundsätzlich vorgesehen sein, dass die Temperatur ein- oder mehrfach im angegebenen Bereich variiert wird.

Eine besonders hohe Eisenausbeute wird in weiterer Ausgestaltung der Erfindung dadurch erzielt, dass der pH-Wert in Schritt b) auf einen Wert zwischen 7,4 und 11,4, insbesondere zwischen 8,4 und 11,4, eingestellt wird. Im Wertebereich zwischen 7,2 und 11,4 können die Oberflächenladungen besonders vieler Partikel aus unterschiedlichen Eisenverbindungen vorteilhaft beeinflusst werden. In weiterer Ausgestaltung der Erfindung ist es vorgesehen, dass der in Schritt b) eingestellte pH-Wert während Schritt c) kontinuierlich und/oder stufenweise im Bereich zwischen 7,2 und 12,2 variiert wird. Indem der pH-Wert kontinuierlich und/oder stufenweise verändert wird, können alternativ oder zusätzlich die isoelektrischen Punkte verschiedener Eisenverbindungen gezielt "angefahren bzw. durchfahren" werden, wodurch sich die Ausbeute an eisenhaltigen Verbindungen ebenfalls vorteilhaft steigern lässt. Alternativ oder zusätzlich können die Schritte b) und c) auch zwei- oder mehrfach wiederholt werden.

Weitere Vorteile ergeben sich, indem der pH-Wert durch Zugabe einer Säure, insbesondere einer Mineralsäure, einer organischen Säure, eines sauren Abwassers, eines sauren Kondensats und/oder von FeCl₂, eingestellt wird. In weiterer Ausgestaltung der Erfindung ist es vorgesehen, dass der pH-Wert durch Zugabe einer Base, insbesondere von Natronlauge und/oder eines basischen Abwassers, eingestellt wird. In weiterer Ausgestaltung der Erfindung ist es vorgesehen, dass der pH-Wert durch Zugabe einer hydrolysierbaren Verbindung, insbesondere eines Öls und/oder eines Fetts, eingestellt wird. Neben der Einstellung des pH-Wertes, welche Voraussetzung für die Desagglomerierung ist, können hierdurch verschiedene weitere Vorteile erzielt werden. Beispielsweise können vorteilhaft saure oder basische Abwässer, Kondensate und dergleichen produktiv zur pH-Wert Einstellung sowie gegebenenfalls zur Einstellung des Feststoff-Wasser-Verhältnisses verwendet werden. Darüber hinaus kann durch die Wahl der entsprechenden Säure oder Base Einfluss auf die Desagglomerierung und auf die Reagglomerierung der Partikel und damit auf die Ausbeute an eisenreicher Fraktion genommen werden. Als besonders Ausbeute steigernd haben sich beispielsweise die kostengünstig erhältlichen Verbindungen Essigsäure und Zitronensäure gezeigt. Durch die Verwendung einer hydrolysierbaren Verbindung, beispielsweise eines Pflanzenöls oder -fettes, können neben einer pH-Werteinstellung zusätzlich Dispergiermittel in situ gebildet werden (durch Verseifung von Fettsäuren), welche zur Durchmischbarkeit und Stabilisierung der desagglomerierten Partikel beitragen können.

In einer weiteren vorteilhaften Ausgestaltung der Erfindung ist vorgesehen, dass der Suspension vor Schritt c) wenigstens eine Calcium-Verbindung, insbesondere Calciumoxid und/oder Calciumhydroxid und/oder Calciumsulfat, und/oder wenigstens ein Tensid zugesetzt wird. Durch Zugabe einer Calcium-Verbindung kann die Pufferwirkung der ionenaustauschenden Zeolith-Mineralien des Bauxitrückstands vorteilhaft zurückgedrängt und die Verarbeitbarkeit der Suspension sowie die Ausbeute an eisenreichen Verbindungen entsprechend verbessert werden. Die durch die Zugabe der Calcium-Verbindung(en) in die Suspension eingebrachten Ca-Ionen werden in Zeolithe bzw. zeolithartige Verbindungen des Bauxitrückstands eingebunden. Bei diesen Zeolithen bzw. zeolithartigen Verbindungen handelt es sich überwiegend um Natrium-Aluminium-Silikate, die während des Bauxitaufschlusses gebildet wurden. Durch das Binden der Ca-Ionen in den Zeolithen werden deren Ionenaustauschfähigkeiten verringert, was wiederum die Einstellung eines optimalen pH-Wertes in Schritt b) erleichtert. Weiterhin wird die Dispergierung der desagglomerierten Tonpartikel verbessert, wodurch eine vereinfachte Abtrennung der eisenreichen Fraktion in Schritt d), beispielsweise durch Gravitation im Sedimenter, erzielt wird. Durch die Verwendung von Gips als Calcium-Verbindung kann zudem auf kostengünstige Weise die Einstellung optimaler pH-Werte vorteilhaft erleichtert werden, da beispielsweise weniger Säure zugegeben werden muss als dies ohne Gips-Zugabe der Fall wäre. Obwohl Gips (CaSO₄×2 H₂O) im wesentlichen pH-neutral ist, kann Gips zum Teil in Lösung gehen und Calcium- und Sulfationen bilden. Die Sulfationen binden ähnlich wie Hydroxid-Ionen an korrespondierende Oberflächenbereiche der Tonpartikel und verändern so deren elektrische Oberflächenladung. Hierdurch wird eine verbesserte Dispergierung der im Bauxitrückstand vorhandenen Tonpartikel ermöglicht, so dass diese kolloidal gelöst in der Suspension gehalten werden. Als Gips kann beispielsweise Gips aus Rauchgasentschwefelungsanlagen (REA-Gips) und/oder Naturgips verwendet werden.

In einer weiteren vorteilhaften Ausgestaltung der Erfindung ist vorgesehen, dass der Suspension bezogen auf die Trockenmasse des Bauxitrückstands zwischen 0,1 % und 10 %, insbesondere zwischen 2 % und 6 % an Calcium-Verbindung und/oder zwischen 2 und 9 Promille an Dispergiermittel zugesetzt wird. Hierdurch werden die Verarbeitbarkeit des Bauxitrückstands, der Desagglomerierungsgrad und die Ausbeute an eisenreicher Fraktion vorteilhaft gesteigert. Unter einem Massenanteil zwischen 0,1 % und 10 % sind insbesondere Massenanteile von 0,1 %, 0,2 %, 0,5 %, 1,0 %, 1,5 %, 2 %, 3 %, 4 %, 5 %, 6 %, 7 %, 8 %, 9 %, 10 % sowie entsprechende Zwischenwerte zu verstehen. Durch die Zugabe der Calcium-Verbindung werden verschiedene Ca-Silikate und Ca-Aluminate gebildet, welche eine einfachere Auf- bzw. Abtrennung der eisenreichen Fraktion und eine bessere Filtrierbarkeit der silikatreichen Fraktion ermöglichen. Während sich Natrium-Silikate erst bei Temperaturen über 110°C bilden, bilden sich Ca-Silikate bereits bei Raumtemperatur und sorgen zudem für eine Bindung von Na-Ionen in Form komplexer Na-Ca-Silikate. Durch die Zugabe einer oder mehrerer Calcium-Verbindungen kann aufgrund der eintretenden Mineral-Neubildung zudem die Viskosität der BR-Suspension verändert werden. Wird Gips als Calcium-Verbindung zugesetzt, haben sich Massenanteile zwischen 0,5 % und 2 % als besonders vorteilhaft gezeigt. Werden zu hohe Mengen an Calcium-Verbindung zugesetzt, können unerwünschte Klebeeffekte zwischen den Tonpartikeln auftreten. Unter Anteilen zwischen 2 ‰ und 9 ‰ an Dispergiermittel sind insbesondere Anteile von 2,0 ‰, 2,5 ‰, 3,0 ‰, 3,5 ‰, 4,0 ‰, 4,5 ‰, 5,0 ‰, 5,5 ‰, 6,0 ‰, 6,5 ‰, 7,0 ‰, 7,5 ‰, 8,0 ‰, 8,5 ‰ oder 9,0 ‰ sowie entsprechende Zwischenwerte zu verstehen. Im Hinblick auf das Dispergiermittel haben sich Anteile zwischen 3 Promille und 7 Promille in der Regel als ausreichend gezeigt.

In einer weiteren vorteilhaften Ausgestaltung der Erfindung ist vorgesehen, dass der Suspension, vorzugsweise vor und/oder während Schritt c), wenigstens ein Trennmittel, insbesondere ein Fließmittel und/oder Partikel, insbesondere Eisenoxidpartikel, zugesetzt wird. Unter Trennmitteln werden im Rahmen der vorliegenden Erfindung Verbindungen verstanden, die die Desagglomerisierung der Mineralagglomerate unterstützen. Fließmittel, die auch als Verflüssiger, Plastifikatoren, Superplastifikatoren oder Superverflüssiger bezeichnet werden können, sind grundsätzlich aus dem Bereich der Betonherstellung bekannt und dienen dort zur Verbesserung der Fließfähigkeit. Die ein- oder mehrmalige Zugabe wenigstens eines solchen Fließmittels zur bereitgestellten Suspension führt im Rahmen der vorliegenden Erfindung vorteilhaft zur Herabsetzung der Oberflächenspannung der suspendierten Mineralpartikel. Darüber hinaus erschweren Fließmittel eine Reagglomerisierung insbesondere der silikatreichen Tonplättchen, indem ihre zahlreichen Seitenketten wie beispielsweise bei PCE (Polycarboxylatester) sterische Hinderungen aufbauen. Dadurch unterstützen Fließmittel durch Aufrechterhaltung der Partikeltrennung die Desagglomerisierung und die folgende Auftrennung in eine eisenreiche und wenigstens eine weitere Fraktion. Dies ermöglicht eine signifikante Steigerung der Eisenausbeute. Für den großtechnischen Einsatz ist es von besonderem Interesse, dass bereits geringe Mengen des Fließmittels zur deutlichen Verbesserungen der Desagglomeration führen, wodurch die Wirtschaftlichkeit des Verfahrens vorteilhaft verbessert wird. Als Fließmittel können beispielsweise Melaminsulfonat und/oder Melaminsulfonat-Derivate verwendet werden. Durch diese Verbindungen wird zudem die Oberflächenspannung des vorhandenen Wassers herabgesetzt und eine Schmierwirkung bewirkt, wodurch die Desagglomerierung ebenfalls erleichtert wird. Alternativ oder zusätzlich können als Fließmittel grundsätzlich auch Ligninsulfonate, Naphthalin-Formaldehyd-Sulfonate, Polycarboxylate, Polycarboxylatester (PCE) und/oder Hydroxycarbonsäuren und deren Salze verwendet werden. Bei PCE sind besonders die zahlreichen Seitenketten von Bedeutung, da sie eine besonders hohe sterische Behinderung für die unerwünschte Reagglomerierung bereits getrennter Partikel in der Suspension darstellen.

Alternativ oder zusätzlich können gezielt Partikel, insbesondere Eisenoxidpartikel zur Suspension zugegeben werden. Die zugegebenen Partikel wirken wegen ihres Gewichts und ihrer Form als kleine "Geschosse", die bei der Desagglomerierung durch Zusammenstöße mit Agglomeraten in der Suspension die Zerkleinerung dieser Agglomerate fördern. Insbesondere bei Verwendung von Eisenoxidpartikel fungieren die zugegebenen Partikel zudem auch als Impfkristalle bzw. Kristallkeime, die die desagglomerierten Eisenpartikel "sammeln" und binden, wodurch die Eisenausbeute ebenfalls vorteilhaft gesteigert wird. Dabei kann vorgesehen sein, dass als Partikel Eisenpartikel verwendet werden, die mit Hilfe des erfindungsgemäßen Verfahrens bereits abgetrennt wurden und in das Verfahren rückgeführt werden. Hierdurch kann das Verfahren besonders wirtschaftlich und mit besonders hohen Eisenausbeuten durchgeführt werden.

In einer weiteren vorteilhaften Ausgestaltung der Erfindung ist vorgesehen, dass wenigstens ein Fließmittel bezogen auf die Trockenmasse des Bauxitrückstands mit einem Gewichtsanteil zwischen 0,01 % und 1,0 %, insbesondere zwischen 0,4 % und 0,6 % zur Suspension zugesetzt wird. Unter einem Gewichtsanteil des Fließmittels zwischen 0,01 % und 1,0 % sind insbesondere Gewichtsanteile von 0,01 %, 0,10 %, 0,15 %, 0,20 %, 0,25 %, 0,30 %, 0,35 %, 0,40 %, 0,45 %, 0,50 %, 0,55 %, 0,60 %, 0,65 %, 0,70 %, 0,75 %, 0,80 %, 0,85 %, 0,90 %, 0,95 % und 1,0 % sowie entsprechende Zwischenwerte zu verstehen. Hierdurch kann das Verfahren auch im großtechnischen Rahmen besonders wirtschaftlich durchgeführt werden, da die angegebenen, relativ geringen Fließmittelmengen bereits zu einer deutlichen Verbesserungen der Desagglomeration führen und damit die zur Durchführung des Verfahrens benötigte Zeit verkürzen und eine verbesserte Ausbeute ermöglichen.

In weiterer Ausgestaltung der Erfindung ist es vorgesehen, dass Partikel zugesetzt werden, die zumindest überwiegend einen mittleren Durchmesser zwischen 0,3 µm und 25 µm, insbesondere zwischen 0,4 µm und 20 µm aufweisen Unter Partikeln, die zumindest überwiegend einen mittleren Durchmesser zwischen 0,3 µm und 25 µm aufweisen, werden im Rahmen der Erfindung Partikel verstanden, von denen mindestens 51 % einen mittleren Durchmesser von 0,3 µm, 0,4 µm, 0,5 µm, 0,6 µm, 0,7 µm, 0,8 µm, 0,9 µm, 1,0 µm, 1,0 µm, 1,5 µm, 2,0 µm, 2,5 µm, 3,0 µm, 3,5 µm, 4,0 µm, 4,5 µm, 5,0 µm, 5,5 µm, 6,0 µm, 6,5 µm, 7,0 µm, 7,5 µm, 8,0 µm, 8,5 µm, 9,0 µm, 9,5 µm, 10,0 µm, 10,5 µm, 11,0 µm, 11,5 µm, 12,0 µm, 12,5 µm, 13,0 µm, 13,5 µm, 14,0 µm, 14,5 µm, 15,0 µm, 15,5 µm, 16,0 µm, 16,5 µm, 17,0 µm, 17,5 µm, 18,0 µm, 18,5 µm, 19,0 µm, 19,5 µm, 20,0 µm, 20,5 µm, 21,0 µm, 21,5 µm, 22,0 µm, 22,5 µm, 23,0 µm, 23,5 µm, 24,0 µm, 24,5 µm, 25,0 µm oder entsprechende Zwischenwerte aufweisen. Indem die zugegebenen Partikel zumindest überwiegend im angegebenen Korngrößenbereich liegen, wirken sie wegen ihres Gewichts und ihrer grundsätzlich eher runden Formen besonders wirksam als kleine Geschosse, die beispielsweise von einem Dissolverrührwerk auf hohe Geschwindigkeit gebracht werden und durch Zusammenstöße mit Agglomeraten die Desagglomerisierung unterstützen. Gleichzeitig dienen sie als Impfkristalle /-keime, sammeln und binden in der Suspension vorhandene Eisenpartikel. Dies ist ein zeitabhängiger Vorgang. Ähnliche Effekte können anstatt mit einem Dissolverrührer auch durch den Einsatz von Ultraschall und/oder anderen Desagglomerisierungsmitteln erreicht werden.

Die zum Desagglomerieren erforderliche Kavitation bzw. die Kavitationskräfte werden in weiterer vorteilhafter Ausgestaltung der Erfindung durch wenigstens ein bewegtes Objekt, insbesondere durch einen Dissolver-Rührer, einen Scher-Rührer, ein Laufrad einer Kreiselpumpe, ein Laufrad einer Turbine, einen Rüttler und/oder einen Propeller, erzeugt. In weiterer Ausgestaltung der Erfindung wird die Kavitation durch Beaufschlagung der Suspension mit Ultraschall erzeugt. Die technisch einfachste Möglichkeit für Kavitation besteht dabei in der Verwendung eines schnell in der Suspension bewegten Objektes. Nach dem Gesetz von Bernoulli ist der statische Druck einer Flüssigkeit umso geringer, je höher die Geschwindigkeit ist. Fällt der statische Druck unter den Verdampfungsdruck der Flüssigkeit, bilden sich Dampfblasen. Diese werden anschließend mit der strömenden Flüssigkeit in Gebiete höheren Druckes mitgerissen. Mit dem erneuten Ansteigen des statischen Drucks über den Dampfdruck kondensiert der Dampf in den Hohlräumen schlagartig. Dabei treten extreme Druck- und Temperaturspitzen auf. Lokale Druckänderungen können daher besonders einfach mit Hilfe von Laufschaufeln, Laufrädern, Dissolver-Rührern, Scher-Rührern, Pumpen, Rüttlern und dergleichen erzeugt werden. Alternativ oder zusätzlich kann Kavitation auch durch Beaufschlagung der Suspension mit Ultraschall erzeugt werden. Dabei kommt es in den Druckminima der Schwingung zur Kavitation. Ein weiterer Vorteil der Verwendung von Ultraschall besteht im vergleichsweise hohen Temperatureintrag in die Suspension, so dass gleichzeitig eine Temperatureinstellung vorgenommen werden kann.

Indem das Objekt zum Erzeugen der Kavitation mit einer Umdrehungsfrequenz von mindestens 1000 min⁻¹, insbesondere von mindestens 2000 min⁻¹ durch die Suspension bewegt wird, kann vorteilhaft eine signifikante Erhöhung der Scherkräfte in der Suspension erreicht werden. Beispielsweise können hierzu besonders leistungsfähige Dissolverrührwerke verwendet werden, die Umdrehungszahlen bis 3000 1/min oder mehr erreichen können. Die Verwendung von schnell drehenden Rührwerken führt zu einer erhöhten Kavitation und in der Folge zum besonders schnellen und vollständigen Zerreißen und Dispergieren der Mineralpartikelkomplexe.

Eine technisch besonders einfach, schnelle und kostengünstige Möglichkeit zur Abtrennung der eisenreichen Fraktion wird in weiterer Ausgestaltung der Erfindung dadurch erzielt, dass die weitere Fraktion (Tonfraktion) durch Absaugen und/oder Dekantieren und/oder Filtrieren, insbesondere durch Vakuumfiltrieren, von der eisenreichen Fraktion abgetrennt wird. Aufgrund der guten Trennung der beiden Fraktionen werden dabei grundsätzlich keine zusätzlichen Hilfsstoffe wie Flockungsmittel oder dergleichen benötigt.

Weitere Vorteile ergeben sich dadurch, dass die eisenreiche Fraktion nach dem Abtrennen gewaschen und/oder getrocknet wird. Dies ermöglicht eine vereinfachte Weiterverarbeitung wie beispielsweise eine Verhüttung und Roheisengewinnung der eisenreichen Fraktion.

In einer weiteren vorteilhaften Ausgestaltung der Erfindung ist vorgesehen, dass der weiteren Fraktion nach dem Abtrennen wenigstens eine Calcium-Verbindung, insbesondere Calciumoxid und/oder Calciumhydroxid und/oder Calciumsulfat, zugesetzt wird. Hierdurch wird einerseits die Filtrierbarkeit und damit die Abtrennbarkeit der silikatreichen Fraktion verbessert, andererseits erhält man einen hierdurch eine Art Ton, welcher sich besonders gut als Bodenverbesserer eignet. Insbesondere durch die Zugabe von Calciumsulfat wird ein Produkt erhalten, welches aufgrund der Bioverfügbarkeit der Sulfat-Ionen eine Begrünung von BR-Deponien und dergleichen ermöglicht. Darüber hinaus werden in der weiteren Fraktion vorhandene Na-Ionen in Form von Na-Ca-Silikaten gebunden, so dass im Gegensatz zum Bauxitrückstand keine Umweltgefahr mehr durch austretende oder ausgewaschene Natronlauge besteht.

In einer weiteren vorteilhaften Ausgestaltung der Erfindung ist vorgesehen, dass der weiteren Fraktion bezogen auf ihre Trockenmasse zwischen 2 % und 15 %, insbesondere zwischen 5 % und 10 % an Calcium-Verbindung zugesetzt wird. Unter Massenanteilen zwischen 2 % und 15 % sind im Rahmen der Erfindung Massenanteile von 2 %, 3 %, 4 %, 5 %, 6 %, 7 %, 8 %, 9 %, 10 %, 11 %, 12 %, 13 %, 14 % oder 15 % sowie entsprechende Zwischenwerte zu verstehen. Hierdurch können die Eigenschaften der weiteren Fraktion optimal an ihren jeweiligen Einsatzzweck, beispielsweise als Zusatz zu Sand, saurer Erde, Kalk, Gips, Dünger oder als Filtermedium oder Bodenverbesserer, angepasst werden.

In einer weiteren vorteilhaften Ausgestaltung der Erfindung ist vorgesehen, dass die Temperatur der weiteren Fraktion nach dem Abtrennen auf einen Wert zwischen 30°C und 70°C eingestellt wird. Unter einer Temperatur zwischen 30°C und 70°C sind im Rahmen der Erfindung Temperaturen von 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C oder 70°C sowie entsprechende Zwischentemperaturen zu verstehen. Hierdurch kann die Mineral-Neubildung beschleunigt und gezielt gesteuert werden. Durch die Bildung unterschiedlicher Hydrat-Verbindungen wird zudem das vorhandene Restwasser zumindest teilweise gebunden, wodurch ein leicht brechbares Material erhalten wird. Oberhalb von etwa 70°C bilden sich stark unterschiedliche Hydratverbindungen, welche die Weiterverarbeitung eher erschweren.

Ein weiterer Aspekt der Erfindung betrifft eine Vorrichtung zum Durchführen eines Verfahrens nach einem der vorhergehenden Ausführungsbeispiele. Um eine nasschemische Abtrennung wenigstens eines Teils der eisenhaltigen Bestandteile im Bauxitrückstand als Wertstoffe zu ermöglichen, umfasst die erfindungsgemäße Vorrichtung zumindest einen Behälter zur Aufnahme der wässrigen Suspension des Bauxitrückstands, eine Einrichtung zum Einstellen des pH-Wertes der wässrigen Suspension, eine Einrichtung zum Zugeben eines Dispergiermittels, eine Einrichtung zum zumindest teilweisen Desagglomerieren suspendierter Mineralagglomerate des Bauxitrückstands durch Erzeugung von Kavitation und eine Einrichtung zum Auftrennen des resultierenden Gemischs in eine eisenreiche Fraktion und wenigstens eine weitere Fraktion. Die sich hieraus ergebenden Vorteile sind den vorhergehenden Beschreibungen des erfindungsgemäßen Verfahrens zu entnehmen und gelten entsprechend für die erfindungsgemäße Vorrichtung. Vorteilhafte Ausgestaltungen des Verfahrens sind zudem als vorteilhafte Ausgestaltungen der Vorrichtung und umgekehrt anzusehen.

Die mittels eines Verfahrens nach einem der vorhergehenden Ausführungsbeispiele und/oder mittels einer Vorrichtung nach dem vorhergehenden Ausführungsbeispiel gewonnene eisenreichen Fraktion kann zur Eisengewinnung verwendet werden. Hierdurch ist eine einfache, skalierbare und nasschemisch durchführbare Gewinnung von Eisen aus dem bislang als Abfall angesehenen Bauxitrückstand mit entsprechenden Umwelt- und Kostenvorteilen gegeben.

Die mittels eines Verfahrens nach einem der vorhergehenden Ausführungsbeispiele und/oder mittels einer Vorrichtung nach dem vorhergehenden Ausführungsbeispiel gewonnene weitere Fraktion kann als Filterkörper, insbesondere für Schwermetalle, zur Entschwefelung und/oder Entarsenierung, zur Wasserreinigung und/oder Abgasreinigung, als Pyrolyse-Katalysator, insbesondere in einem Biomassereaktor, als Bodenverbesserer und/oder als Beimischung zu Sand, saurer Erde, Kalk, Gips, Zement, Beton und/oder Pflanzendünger verwendet werden. Durch diese Verwendungen kann die weitere Fraktion als weiterer Wertstoff neben der eisenreichen Fraktion vorteilhaft genutzt werden, wodurch weitere Umwelt- und Kostenvorteile gegeben sind.

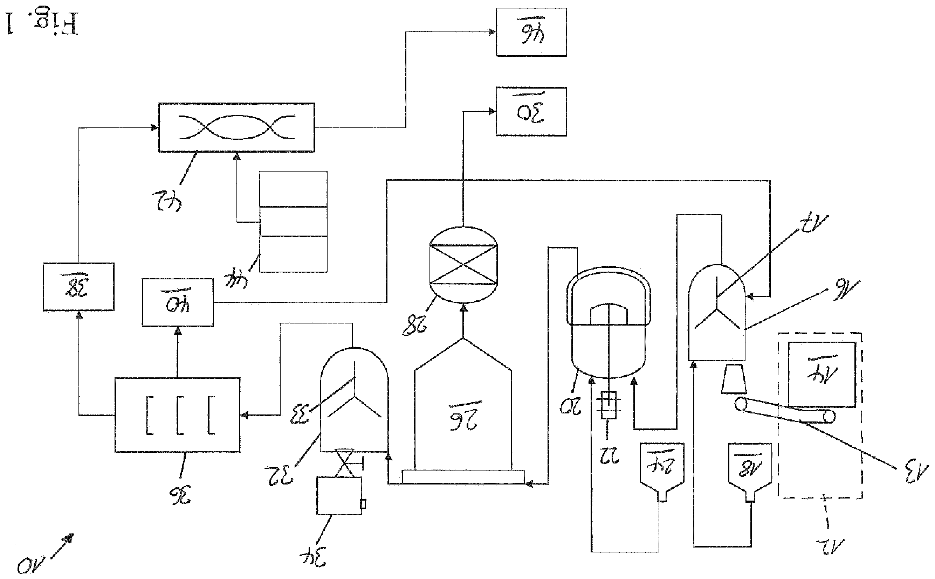

Weitere Merkmale der Erfindung ergeben sich aus den Ansprüchen, den Ausführungsbeispielen und der Zeichnung. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt Fig. 1 eine Prinzipdarstellung einer erfindungsgemäßen Vorrichtung zum Durchführen des erfindungsgemäßen Verfahrens zur Wertstoffgewinnung aus einem Bauxitrückstand.

### Beispiel 1

Fig. 1 zeigt eine Prinzipdarstellung einer erfindungsgemäßen Vorrichtung 10 zum Durchführen des erfindungsgemäßen Verfahrens zur Wertstoffgewinnung aus einem Bauxitrückstand. Die in Fig. 1 gezeigte Vorrichtung 10 eignet sich dabei grundsätzlich auch zur Durchführung aller folgenden Beispiele.

Die Vorrichtung 10 umfasst eine grundsätzlich optionale Übergabestelle 12, in welcher Bauxitrückstand (BR), der beispielsweise unmittelbar aus dem Bayer-Prozess weitergeleitet wird und/oder aus Altdeponien stammt, zur Wertstoffgewinnung mit Hilfe einer Transporteinrichtung 13 übergeben wird. Der BR kann in der Übergabestelle 12 mittels einer ebenfalls optionalen Vakuumfiltertrommel 14 oder einer anderen geeigneten Trennvorrichtung von Aluminat-Lösung, überschüssigem Wasser oder dergleichen befreit werden. Der BR wird anschließend in einen ebenfalls grundsätzlich optionalen Rührbehälter 16 überführt, in welchem mit Hilfe eines Rührwerks 17 eine Bauxitrückstand-Suspension hergestellt wird. Hierbei kann bei Bedarf aus dem Wasserbehälter 18 eine entsprechende Wassermenge zudosiert werden, um eine gewünschte Viskosität, einen gewünschten Trockensubstanzanteil und/oder einen gewünschten Ausgangs-pH-Wert einzustellen. Aus dem Rührbehälter 16 wird die wässrige Suspension in einen Desgglomerator 20 gepumpt, welcher mit einem Dissolverrührwerk 22 und/oder einer Ultraschallvorrichtung (nicht gezeigt) und/oder einer anderen geeigneten Einrichtung zum Erzeugen von Kavitation ausgestattet ist. Der Desgglomerator 20, welcher im gezeigten Ausführungsbeispiel als Einrichtung zum zumindest teilweisen Desagglomerieren suspendierter Mineralagglomerate des Bauxitrückstands dient, kann einen einwandigen oder mehrwandigen Behälter aufweisen. Mehrwandige Behälter bieten insbesondere den Vorteil einer verbesserten Temperierbarkeit und einer verbesserten thermischen Isolierung auf. Weiterhin kann grundsätzlich auch auf den Rührbehälter 16 verzichtet und die zu desagglomerierende Suspension direkt im Desagglomerator 20 hergestellt werden.

Aus einem Behälter 24 können Trennchemikalien zu der Suspension zudosiert werden. Bei den Trennchemikalien kann es sich beispielsweise um Säuren zum Einstellen des pH-Werts der Suspension und/oder um Fließmittel wie Polycarboxylatester (PCE), Melaminsulfonat oder ähnliche. Die Verwendung von Trennmitteln führt zur Herabsetzung der Oberflächenspannung der Mineralpartikel und unterstützt die Auflösung der Komplexbindung. Der Behälter 24 dient somit im vorliegenden Ausführungsbeispiel auch als Einrichtung zum Einstellen des pH-Wertes der wässrigen Suspension. Bei PCE sind besonders die zahlreichen Seitenketten von Bedeutung, da sie eine sterische Behinderung für das Zusammenkommen und Aneinanderbinden von Partikeln in der Suspension darstellen. Sie erhalten mit anderen Worten die räumliche Trennung der Partikel aufrecht. Für den großtechnischen, wirtschaftlichen Einsatz ist es interessant, dass bereits geringe Mengen des Fließmittels (z. B. 0,4 % bis 0,6 % der Feststoffmasse) zu deutlichen Verbesserungen der Desagglomeration führen, weil sie ein erneutes Aneinanderbinden insbesondere von Tonplättchen verhindern.

Weiterhin können die Trennchemikalien Partikel umfassen. Beispielsweise können bereits mit Hilfe des Verfahrens gewonnen Eisenoxidpartikeln zur Suspension zugegeben werden, um die Eisenoxidausbeute zu steigern. Die Eisenoxidpartikel besitzen vorzugsweise einen Korngrößenbereich zwischen 0,4 µm und 20 µm und wirken wegen ihres Gewichts und ihrer rundlichen Form (keine Plättchen wie die Tonpartikel) als kleine Geschosse, die vom Dissolverrührwerk 22 auf hohe Geschwindigkeit beschleunigt werden und durch Zusammenstöße mit Agglomeraten in der Suspension diese Agglomeraten zusätzlich zerkleinern. Gleichzeitig dienen sie als Impfkristalle bzw. Impfkeime und sammeln und binden in der Suspension befindliche kleinere Eisenpartikel. Dies ist ein zeitabhängiger Vorgang. Ähnliche Effekte können anstatt mit dem Dissolverrührwerk 22 auch durch den Einsatz von Ultraschall oder anderen Desagglomerisierungseinrichtungen erreicht werden.

Als weitere Trennchemikalie kann eine Calcium-Verbindung wie beispielsweise Branntkalk, Löschkalk oder Gips (CaSO₄ × 2 H₂O) zur Suspension gegeben werden. Insbesondere Gips kann dabei die erforderliche Menge an Säurezugabe, insbesondere der sehr wirkungsvollen und umweltfreundlichen Zitronensäure, deutlich verringern, wodurch entsprechende Kostensenkungen gegeben sind. Obwohl Gips selbst im Wesentlichen pH-neutral ist, kann Gips unter Bildung von Ca- und Sulfationen zum Teil in Lösung gehen. Die Sulfationen binden an die gleichen Oberflächenplätze der Tonpartikel wie beispielsweise die OH-Gruppen der Zitronensäure und verändern so deren elektrische Oberflächenladung in ähnlicher Weise. Dadurch helfen die Sulfationen bei der Dispergierung der Tonpartikel, damit diese kolloidal gelöst bzw. suspendiert vorliegen. Gleichzeitig verringern freigesetzte Ca-Ionen durch Einbau in Zeolithe, die im wesentlichen als Natrium-Aluminium-Silikate während des Bauxitaufschlusses gebildet wurden, deren Ionenaustauschfähigkeiten und verbessern damit die Einstellbarkeit des optimalen pH-Wertes für die Dispergierung der Mineralbestandteile der BR-Suspension. Dies verbessert die folgende Auftrennung des resultierenden Gemischs durch Gravitation im stromab liegenden Sedimenter 26. Der Sedimenter 26 dient somit im gezeigten Ausführungsbeispiel als Einrichtung zum Auftrennen des resultierenden Gemischs in eine eisenreiche Fraktion und wenigstens eine weitere, eisenärmere Fraktion. Eine Gips-Zugabe kann beispielsweise in Form von REA-Gips oder Naturgips erfolgen. Die Menge liegt im Optimum bei 0,5 - 2% und sollte in der Regel 4 % der Trockenmasse der Suspension nicht überschreiten, da ansonsten Klebeeffekte zwischen den Tonpartikeln auftreten könnten.

Die Trennchemikalien können grundsätzlich vor und/oder während und/oder nach dem Desagglomerisieren einzeln und/oder in beliebigen Kombinationen zugegeben werden. Die Trennchemikalien können dabei grundsätzlich in einer gemeinsamen Abteilung des Behälters 24 vorgehalten werden. Der Behälter 24 kann grundsätzlich aber auch mehrere separate Abteilungen bzw. mehrere Einzelbehälter aufweisen, in welchen jeweils sortenreine Trennchemikalien vorgehalten und in der gewünschten Menge und Reihenfolge zudosiert werden.

Das Dissolverrührwerk 22 ist vorzugsweise mit einem schnell drehenden Rührer (bis zu 3.000 U/min oder mehr) ausgestattet, um eine möglichst große Kavitation und in der Folge ein besonders wirksames Zerreißen und Dispergieren der Mineralpartikelkomplexe als Vorbereitung der Sedimentation zu ermöglichen. Dieser Umwandlungsvorgang wird durch die gezielte Einstellung des pH-Werts durch entsprechende Zugabe von Trennchemikalien (z. B. von Säuren wie Zitronensäure, Schwefelsäure etc.) zusätzlich verbessert. Die Desagglomerisierung sowie die Reagglomerisierung der Mineralpartikel stellen zeitabhängige Vorgänge dar, die von verschiedenen Faktoren abhängen. Nach dem teilweisen oder zumindest annähernd vollständigen Desagglomerisieren der Mineralagglomerate wird das resultierende Gemisch in den Sedimenter 26 gepumpt. Hier trennt sich das Gemisch mit der Zeit in eine silikatreiche, orangefarbene Schwimmphase und eine zum Boden sinkende eisenreiche Fraktion mit bräunlicher Farbe auf. Die Bodenphase wird in einem grundsätzlich optionalen Wäscher 28 gewaschen und gegebenenfalls zumindest teilweise getrocknet. Durch Waschen des abgetrennten Eisenerzes 30 kann dessen Tonanteil nochmals verringert werden. Andererseits kann aber ein eventuell verbliebener Tonanteil auch als Bindemittel für die Herstellung von Eisenerz-Pellets verwendet werden. Das Trocknen erfolgt vorzugsweise mit Hilfe von Abwärme des Verfahrens. Als Produkt erhält man hochwertiges Eisenerz 30 mit einem Eisengehalt von mindestens 40%, normalerweise von über 50%, das ohne weitere Behandlungsschritte direkt zur Eisen- bzw. Stahlproduktion verwendet werden kann.

Die silikatreiche Schwimmphase kann nach dem Abtrennen direkt verwendet oder optional in einen weiteren Rührbehälter 32 mit einem Rührwerk 33 überführt werden. Hier kann die Schwimmphase unter Rühren mit einer Calcium-Verbindung, beispielsweise mit Branntkalk, Weißkalk, Gips und/oder Löschkalk, versetzt und gegebenenfalls auf eine Temperatur zwischen 20 °C und 65°C, also beispielsweise auf eine Temperatur von 20°C, 21°C, 22°C, 23°C, 24°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C, 44°C, 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C oder 65°C erwärmt werden. Die Calcium-Verbindung kann beispielsweise im Behälter 34 gelagert und über eine Zellradschleuse zudosiert werden.

Hierbei kommt es zu einer Tonbildung, indem die in der Schwimmphase enthaltenen Minerale mit Calcium unter Mineralneubildung zu einem quelltonartigen Calcium-Aluminat-Tonschlamm (CATO, 38) reagieren. Als Inhaltsstoffe des CATO 38 überwiegend Calcium- und Natrium-Aluminate, die aus den im BR enthaltenen Aluminiumverbindungen gebildet werden, sowie gegebenenfalls Goethit, der aus etwaigen, in der Schwimmphase verbliebenen Eisenoxiden und -hydroxiden gebildet wird. Die ablaufenden Hauptreaktionen sind dabei die Bildung von Tricalciumaluminat

3 Ca(OH)₂ + 2 Al₂O₃ + 3 H₂O -> Ca₃Al₂[(OH)₄]₃

sowie gegebenenfalls die Umwandlung von Hämatit in Goethit:

Fe₂O₃ + H₂O -> 2 FeO(OH).

Der gebildete CATO 38 kann über eine Kammerfilterpresse 36 oder eine andere Entwässerungseinrichtung entwässert werden. Das abgetrennte Filtrat 40 kann zum Disintegrator bzw. Rührbehälter 16 zurückgeführt werden, wodurch erhebliche Mengen an Frischwasser eingespart werden und die benötigte Flüssigkeit zumindest überwiegend in einem Kreisprozess geführt werden kann.

Das erhaltene Produktgemisch, das heißt der CATO 38 verfügt über eine besonders große reaktive Oberfläche und eignet sich für verschiedene Anwendungen. Beispielsweise kann der CATO 38 getrocknet und/oder als Filterelement, insbesondere zum Filtrieren von Pflanzenöl und/oder von verschmutztem Wasser, und/oder als Bodenverbesserer und/oder als Klärungsmittel und/oder als Zementzusatz und/oder als Baustoff und/oder als Mineraldünger verwendet wird. Mit Hilfe des CATOs 38 kann beispielsweise rohes Pflanzenöl aus Pressung von Ölpflanzen raffiniert und von unerwünschten organischen Bestandteilen befreit werden. Aufgrund seiner hohen spezifischen Oberfläche eignet sich der CATO 38 auch zum Filtrieren von verschmutztem Wasser, wobei über seinen Restalkaligehalt insbesondere saure Gewässer gleichzeitig neutralisiert werden können. Alternativ oder zusätzlich kann der CATO 38 vielfältig als Bodenverbesserer, Klärungsmittel, Zementzusatz, Baustoff und/oder als Mineraldünger verwendet werden. Dabei kann vorgesehen sein, dass der CATO 38 mit Holzkohlestaub vermischt wird, wodurch ein Schwarzerdeähnliches (Terra preta) Gemisch erhältlich ist, welches einen sehr fruchtbaren, einem guten europäischen Ackerboden ebenbürtigen Boden darstellt. Auf diese Weise kann mit Hilfe des bislang als Abfall angesehenen Bauxitrückstands eine nachhaltige Landwirtschaft in der Regenfeldbauzone und in anderen Klimazonen gefördert werden.

Weiterhin kann der CATO 38 mit Biomasse, insbesondere mit Holz, Hackschnitzeln, Rinde, Stroh, Bagasse, Blattmasse, Pflanzenabfällen, Gras, Laub, Dung, Pflanzenöl, Klärschlamm, Gülle, organischem Hausmüll und/oder Sägespänen, vermischt und einer Biomassevergasung unterzogen werden, wodurch weitere Wertstoffe erhältlich sind. Die Biomassevergasung, die vorzugsweise unter Sauerstoffabschluss durchgeführt wird, läuft aufgrund der Eigenschaften des CATOs dabei bereits bei niedrigen Temperaturen zwischen 250°C und 450°C, insbesondere zwischen 280°C und 400°C, ab. Darüber hinaus läuft die Biomassevergasung aufgrund der katalytischen Eigenschaften des CATO 38 teerfrei und ohne nennenswerte Carbonsäurebildung (insbes. ohne Essigsäure- und Ameisensäurebildung) ab.

Zum Vermischen des CATO 38 weist die Vorrichtung 10 einen grundsätzlich optionalen Mischer 42 auf. Die zuzumischen Verbindungen, beispielsweise Sand, Kalk, Gips, Holzkohle, Biomasse etc. können im Behälter 44 vorgehalten und entsprechend zudosiert werden. Je nach zugemischten weiteren Verbindungen erhält man somit neben dem Eisenerz 30 unterschiedliche weitere Produkte 46, die ihrerseits wertvolle Wertstoffe darstellen.

### Beispiel 2

Als Ausgangsmaterial wird Bauxitrückstand aus dem Bayer-Verfahren verwendet, welcher mehrfach gewaschen und über die Vakuumfiltertrommel 14 von der Aluminat-Lösung abgetrennt wurde. Der Bauxitrückstand weist einen Wassergehalt von etwa 35% H₂O auf. Im Rührbehälter 16 werden durch Zugabe von entsprechenden Mengen an Wasser 2 Liter einer Bauxitrückstand-Suspension hergestellt, wobei die Suspension 1 kg Trockensubstanz und einen pH-Wert von 13 besitzt. Unter ständigem Rühren mit Hilfe eines Scherrührers wird die Suspension auf eine Temperatur von etwa 52°C gebracht. Die Verwendung eines Scherrührers ermöglicht dabei vorteilhaft die Erzeugung hoher Scherkräfte durch die Ausbildung überlappender Schichten. Hierdurch verringert sich vorteilhaft die Viskosität der Suspension, da sich die plättchenförmigen Silikatpartikel des Bauxitrückstands im Wesentlichen parallel zu den Schichten ausrichten und neue kollektive Eigenschaften ausbilden. Die thixotrope Suspension wird daher mit steigender Rührdauer bis zum Erreichen eines Viskositätsminimums immer dünnflüssiger. Nach Beendigung der Scherbelastung steigt die Viskosität durch die stochastische Neuordnung der Silikatpartikel zeitabhängig wieder an. Der Suspension wird 1 Liter saures, ölhaltiges Kondensatwasser aus einem Biomassereaktor zugesetzt. Die Suspension wird für ca. 30 Minuten unter Rühren homogenisiert. Bei dem Biomassereaktor handelt es sich um einen Reaktor, in dem Hackschnitzel unter Einsatz des im Folgenden näher beschriebenen Tonproduktes (CATO 38) aus dem erfindungsgemäßen Verfahren pyrolysiert werden. Das Bioöl aus dem sauren Kondensat reagiert unter Seifenbildung, was an einer Schaumbildung erkennbar ist. Der pH-Wert der Suspension sinkt dabei auf etwa 8,4. Danach wird die Suspension in einen größenoptimierten Behälter, beispielsweise den Desagglomerator 22, welcher mit einem 200 mm-Dissolverrührer versehen ist, umgefüllt. Mit Hilfe des Dissolverrührers werden die suspendierten Mineralagglomerate des Bauxitrückstands zumindest teilweises desagglomeriert. Nach ca. 20 Minuten Rührzeit wird die Desagglomeration beendet. Nach einer Absetzzeit von ca. 5-30 Minuten hat sich eine Schwerphase aus Eisenoxiden abgesetzt, über der eine einfach dekantierbare, silikatreiche Schwimmphase steht. Nach Abzug der Schwimmphase in einer Vakuumfiltereinheit wird diese weitere Fraktion zur Weiteraufarbeitung in ein anderes Rührgefäß überführt. Die abgetrennte Eisenerzphase wird ein- oder mehrfach mit Wasser gewaschen und abfiltriert, wodurch sie einen Restwassergehalt von etwa 30% besitzt. Die Eisenerzausbeute beträgt 0,382 kg, entsprechend 38% der eingesetzten Trockenmasse. Der Fe-Gehalt liegt nach Röntgenfluoreszenzanalyse (RFA-Messung) bei etwa 55%, während Ti bei etwa 5% und Na bei etwa 0,5% liegen. Es ist zu betonen, dass das Natrium nicht frei und damit auswaschbar, sondern in Silikaten gebunden vorliegt.

Aus der Schwimmphase erhält man nach dem Abfiltrieren des Wassers eine Art Ton, da nunmehr die Silikat-Minerale deutlich überwiegen. Aufgrund der Abreicherung von Eisenmineralien hat sich die Farbe von rot in gelb-braun bis gelb-orange geändert. Beim Abkühlen bilden sich neue Hydrate, so dass eine teilweise Bindung des Restwassers in den neu gebildeten Mineralien erfolgt. Dieses Kristallwasser kann erst bei Temperaturen über 130°C wieder ausgetrieben werden. Die silikatreiche Fraktion kann leicht gebrochen werden, um sie mit anderen Materialien wie beispielsweise Sand, saurer Erde, Kalk, Gips oder Dünger zu vermischen und beispielsweise einen Bodenverbesserer herzustellen. Im Gegensatz zum ursprünglichen Bauxitrückstand besteht keine Umweltgefahr mehr durch auswaschbare Natronlauge. Die silikatreiche Fraktion weist einen naturverträglichen pH-Wert auf und kann auch als Zuschlagsstoff für Beton, Keramik und dergleichen verwendet werden.

### Beispiel 3

Als Ausgangsmaterial wird erneut Bauxitrückstand aus dem Bayer-Verfahren verwendet, welcher zur Natronlaugen-Rückgewinnung mehrfach gewaschen und über eine Vakuumfiltertrommel (z. B. Vakuumfiltertrommel 14) von der Aluminat-Lösung abgetrennt wurde. Der Bauxitrückstand, welcher nach dem Waschen noch eine Temperatur von etwa 70°C besitzt, weist wiederum einen Wassergehalt von etwa 35% H₂O auf. In einem Rührbehälter (z. B. Rührbehälter 16) werden durch Zugabe entsprechender Wassermengen 2,9 Liter einer Bauxitrückstand-Suspension mit einem pH-Wert von 12-13 hergestellt, wobei die Suspension einen Feststoffgehalt von 1 kg besitzt. Unter ständigem Rühren mit Hilfe eines Zerkleinerungs-Scherrührers wird die Temperatur auf etwa 56°C gebracht. Der Suspension werden 25 ml Pflanzenöl (z.B. rohes Rapsöl) zugesetzt. Die Suspension wird 30 Minuten lang unter Rühren homogenisiert. Durch die Hydrolyse des Pflanzenöls verringert sich der pH-Wert der Suspension auf ca. 12,0. Im Anschluss werden 100 ml Essigsäure, die durch 1:10 Verdünnung aus Eisessig (96% HOAc) erhalten wurde, zugesetzt, wodurch sich der pH-Wert der Suspension auf 7,9 verringert.

Danach wird die Suspension in einen größenoptimierten Behälter (z. B. Desagglomerator 20) umgefüllt, welcher mit einem 100 mm-Dissolverrührer ausgestattet ist und durch Erzeugung von Kavitation desagglomeriert. Nach ca. 20 Minuten Rührzeit wird die Desagglomeration beendet. Nach einer Absetzzeit von ca. 5-30 Minuten hat sich eine Schwerphase aus Eisenoxiden abgesetzt, über der eine sauber dekantierbare Schwimmphase steht. Nach Abzug der Schwimmphase wird die Eisenerzphase mit Spülwasser gewaschen und das Wasser abfiltriert. Die eisenreiche Fraktion weist einen Restwassergehalt von etwa 30% auf. Die Eisenerzausbeute beträgt 0,279 kg, entsprechend 28% der ursprünglich eingesetzten Trockenmasse. Der Fe-Gehalt liegt nach RFA-Messung bei 55%, während Ti bei etwa 5% und Na bei etwa 0,5% liegen. Erneut weist die Fraktion keine freien, auswaschbaren Natrium-Ionen auf, da der gesamte Natrium-Gehalt in Silikaten gebunden vorliegt.

Die Schwimmphase bildet nach dem Abfiltrieren des Wassers eine Art Ton, da die Silikat-Minerale im Vergleich zum ursprünglichen Bauxitrückstand gegenüber den Eisenverbindungen stark angereichert sind. Aufgrund der Abreicherung von Eisenmineralien hat sich die Farbe von rot in hell-orange geändert. Die Filtrierbarkeit der silikatreichen Fraktion kann vorteilhaft verbessert werden, wenn der silikatreichen Fraktion 5-10 Gew.-% Branntkalk zugegeben und das entstandene Gemisch auf Temperaturen zwischen etwa 43-49°C gebracht wird. Beim Abkühlen des Reaktionsgemisches bilden sich neue Hydrate, so dass eine Mineralbindung des Restwassers erfolgt. Dieses kann erst bei Temperaturen jenseits von 130°C wieder ausgetrieben werden. Das Material kann leicht gebrochen werden, um es mit anderen Materialien zu vermischen, z. B. mit Sand, saurer Erde, Kalk, Gips oder Dünger, um einen Bodenverbesserer herzustellen. Die silikatreiche Fraktion kann auch als Zuschlagsstoff für Beton, Keramik u. a. verwendet werden. Im Gegensatz zum ursprünglichen Bauxitrückstand besteht auch hier keine Umweltgefahr mehr durch auswaschbare Natronlauge.

### Beispiel 4

Als Ausgangsmaterial wird erneut Bauxitrückstand aus dem Bayer-Verfahren verwendet, welcher zur Natronlaugen-Rückgewinnung mehrfach gewaschen und über eine Vakuumfiltertrommel (z. B. Vakuumfiltertrommel 14) von der Aluminat-Lösung abgetrennt wurde. Der Bauxitrückstand weist wiederum einen Wassergehalt von etwa 35% H₂O auf. In einem Rührbehälter (z. B. Rührbehälter 16) werden 2,9 Liter Bauxitrückstand-Suspension, enthaltend 1 kg Trockensubstanz mit einem pH-Wert von etwa 13, unter ständigem Rühren (Scherrührer) auf eine Temperatur von 60°C gebracht. Der Suspension werden 25 ml Pflanzenöl (rohes Rapsöl) zugesetzt. Anschließend wird die Suspension für etwa 30 Minuten homogenisiert, wobei das Pflanzenöl alkalisch hydrolysiert wird. Der pH-Wert der Suspension verringert sich auf ca. 12,0. Im Anschluss werden ca. 100 ml 0,5%-ige Schwefelsäure zugesetzt, bis sich ein pH-Wert von etwa 9,1 einstellt.

Danach wird die Suspension in einen geometrisch optimierten Behälter (z. B. Desagglomerator 20) umgefüllt, welcher mit einem 100 mm-Dissolverrührer ausgestattet ist. Mit Hilfe des Dissolverrührers, welcher mit Drehzahlen zwischen etwa 2500 U/min und 3000 U/min betrieben wird, werden Kavitationskräfte in der Suspension erzeugt, so dass Wassermoleküle zwischen die agglomerierten Partikel des Bauxitrückstands "geschossen" werden. Hierdurch werden die Partikel im Zusammenwirken mit dem eingestellten pH-Wert desagglomeriert. Nach ca. 20 Minuten Rührzeit wird die Desagglomeration beendet. Nach einer Absetzzeit von ca. 5-30 Minuten hat sich eine eisenreiche Fraktion abgesetzt, über der eine sauber dekantierbare Schwimmphase steht.

Nach Abdekantieren der Schwimmphase in einen neuen Rührbehälter (z. B. Rührbehälter 32) wird die eisenreiche Phase mit Spülwasser gewaschen und das Wasser abfiltriert (Restwasser 30%). Die Eisenerzausbeute beträgt 0,382 kg, entsprechend 38% der Trockenmasse. Der Fe-Gehalt liegt nach RFA-Messung bei 55%. Die Gehalte an Titan liegen bei 5%, während die Gehalte an Natrium bei ca. 0,5% liegen. Auch hier liegen keine freien Na-Ionen vor, da der Natrium-Anteil in Silikaten gebunden ist. Die Schwimmphase wird im weiteren Rührbehälter auf eine Temperatur von 45-49°C gebracht. Anschließend wird die silikatreiche Fraktion mit 3-10% Branntkalk, bezogen auf 60% der Trockensubstanz versetzt und für etwa 90 Minuten unter Homogenisieren zur Reaktion gebracht. Das entstandene Gemisch wird über eine Vakuumfiltereinheit entwässert, wobei das Filtrieren wesentlich schneller als ohne CaO-Zugabe möglich ist. Es entsteht eine schwache Lauge mit einem pH-Wert zwischen etwa 12,4-12,6 und ein poröser Ton mit Porengrößen unter 1 mm, der sich als Filter- bzw. Absorptionsmedium eignet, z. B. für Schwermetall- und Arsenbindung in der Trinkwasserbereitung. Auch hier besteht keine Gefahr mehr durch freisetzbare Natronlauge. Der pH-Wert des tonartigen Produkts ändert sich durch Alterung schnell auf einen unproblematischen Wert von etwa 9. Das silikatreiche Produkt eignet sich ebenfalls als Zuschlagsstoff für Beton, Keramik und dergleichen.

### Beispiel 5

Als Ausgangsmaterial wird Bauxitrückstand aus dem Bayer-Verfahren verwendet, welcher zur Natronlaugen-Rückgewinnung einfach gewaschen und über eine Vakuumfiltertrommel (z. B. Vakuumfiltertrommel 14) von der Aluminat-Lösung abgetrennt wurde. In einem Rührbehälter (z. B. Rührbehälter 16) werden 2,6 Liter einer Bauxitrückstand-Suspension mit einem Gehalt von 1 kg Trockensubstanz und einem pH-Wert von 13 hergestellt und unter ständigem Rühren (Dissolverrührer mit mittlerer Geschwindigkeit) auf eine Temperatur von 63°C gebracht. Der Suspension werden 25 ml Pflanzenöl (rohes Rapsöl) zugesetzt. Anschließend wird das Gemisch 10 Minuten lang unter Homogenisierung zur Reaktion gebracht. Der pH-Wert verringert sich während dieser Zeit auf ca. 12,0. Im Anschluss werden 10 g Zitronensäure, welche in 200 ml Wasser gelöst wird, in Schritten von jeweils 50 ml zugesetzt. Hierdurch verringert sich der pH-Wert der Suspension stufenweise über ca. 9,2 auf ca. 7,4. Nach jeder Zugabe der Zitronensäurelösung wird die Suspension für 10 Minuten mit höchster Rührgeschwindigkeit gerührt. Auf diese Weise kann die Ausbeute an Eisen bzw. Eisenverbindungen vorteilhaft gesteigert werden, da hierdurch die isoelektrischen Punkte unterschiedlicher Eisenverbindungen schrittweise "durchfahren" werden, woraus eine verbesserte Desagglomerisierung resultiert. Darüber hinaus fungiert die Zitronensäure nicht nur als kostengünstige und einfach handhabbare Säure zur Einstellung des pH-Werts, sondern verhindert als eine Art "Kornfeiner" auch das Reagglomerisieren von eisenreichen und silikatreichen Partikeln. Stattdessen werden die desagglomerisierten Partikel hocheffizient getrennt und in der Suspension verteilt. Nach insgesamt ca. 40 Minuten setzt sich eine Schwerphase aus Eisenoxiden ab, über der eine einfach dekantierbare Schwimmphase steht.

Nach Abzug der Schwimmphase wird die Eisenerzphase mit Spülwasser gewaschen und das Wasser abfiltriert (Restwasser 30%). Die Eisenerzausbeute beträgt 0,428 kg, entsprechend 42% der Trockenmasse. Der Fe-Gehalt liegt nach RFA-Messung bei ca. 55%, während Ti bei 5% und Na bei 0,5% liegen. Erneut wird kein freies Natrium gefunden, da dieses in Silikaten gebunden vorliegt.

Die Schwimmphase stellt sich nach dem Abfiltrieren des Wassers (Schaumbildung geringer als in Beispiel 1) als eine Art Ton dar, da jetzt die Silikat-Minerale gegenüber den Eisenoxiden deutlich überwiegen. Dementsprechend hat sich die Farbe von rot nach orange geändert. Das Filtrieren gestaltet sich sehr viel günstiger, wenn zuvor 5-10 Gew.-% Branntkalk zugegeben wird und das Gemisch bei Temperaturen von 42-49°C abreagiert. Hierdurch bilden sich neue Hydrate, so dass eine Mineralbindung des Restwassers erfolgt. Dieses Kristallwasser kann erst bei Temperaturen jenseits von 130°C wieder ausgetrieben werden. Das entstandene Material kann leicht gebrochen werden, um es mit anderen Materialien zu vermischen, z. B. mit Sand, saurer Erde, Kalk, Gips oder Dünger, um einen Bodenverbesserer herzustellen. Auch eine Verwendung als Zuschlagsstoff für Beton, Keramik und dergleichen ist möglich. Auch hier besteht keine Umweltgefahr mehr durch freisetzbare Natronlauge.

### Beispiel 6

Als Ausgangsmaterial wird erneut Bauxitrückstand aus dem Bayer-Verfahren verwendet, welcher zur Natronlaugen-Rückgewinnung einfach gewaschen und über eine Vakuumfiltertrommel (z. B. Vakuumfiltertrommel 14) von der Aluminat-Lösung abgetrennt wurde. In einem Rührbehälter (z. B. Desagglomerator 20), dessen Geometrie auf den Durchmesser eines verwendeten Dissolverrührers angepasst ist, werden 2,6 Liter Bauxitrückstand-Suspension, welche 1 kg Trockensubstanz enthält und einen pH-Wert von 13 besitzt, unter ständigem Rühren (Dissolverrührer mit mittlerer Geschwindigkeit) auf eine Temperatur von 63°C gebracht. Ein optimales Feststoff-Wasser-Verhältnis liegt regelmäßig bei etwa 1:2 bis 1:5. Der Suspension werden 5 % CaO bezogen auf die Bauxitrückstands-Trockenmasse zugegeben und 40 Minuten lang unter Homogenisierung reagiert. Dabei findet ein Austausch von Na-Ionen gegen Ca-Ionen in den Zeolith-artigen Silikatverbindungen des Bauxitrückstands statt, so dass die lonenaustauschfähigkeit und damit die Pufferwirkung dieser Verbindungen stark verringert wird. Der pH-Wert der Suspension verringert sich auf ca. 12,4 bis 12,6. Im Anschluss werden 10 g Zitronensäure, welche in 200 ml Wasser gelöst ist, in Schritten von jeweils 50 ml zugesetzt. Dabei verringert sich der pH-Wert der Suspension stufenweise über ca. 9,2 auf 7,4. Nach jedem Schritt wird 10 Minuten mit höchster Rührgeschwindigkeit gerührt, um eine Desagglomerisierung der eisenreichen und der silikatreichen Partikel zu erzielen. Vor, während und/oder nach Zugabe der Zitronensäurelösung können grundsätzlich ein oder mehrere Dispergiermittel, Tenside und dergleichen mit einer Konzentration im Bereich von 0,2 Promille zugegeben werden, um eine zusätzlich verbesserte Partikeltrennung zu erzielen. Alternativ oder zusätzlich zu einem Dissolverrührer oder dergleichen können die Kavitationskräfte auch mit Hilfe von Ultraschall erzeugt werden. Hierzu ist der Rührbehälter beispielsweise mit einer Sonotrode oder einer anderen geeigneten Einrichtung zum Erzeugen von Ultraschall versehen.

Nach etwa 40 Minuten hat sich eine Schwerphase aus Eisenoxiden abgesetzt, über der eine sauber dekantierbare Schwimmphase steht. Nach Abzug der Schwimmphase wird die Eisenerzphase mit Spülwasser gewaschen und das Wasser abfiltriert (Restwassergehalt 30%). Die Eisenerzausbeule beträgt 0,457 kg, entsprechend fast 46% der Trockenmasse. Der Fe-Gehalt liegt nach RFA-Messung bei ca. 55%, für Ti bei 5% und für Na bei 0,5%. Erneut wird kein freies Natrium gefunden, da dieses in Silikaten gebunden vorliegt.

Die Schwimmphase stellt sich nach dem Abfiltrieren des Wassers (Schaumbildung geringer als in Beispiel 1) als eine Art Ton dar, in dem die Silikat-Minerale gegenüber den Eisenverbindungen nunmehr deutlich überwiegen. Das Filtrieren gestaltet sich sehr viel günstiger, wenn der silikatreichen Fraktion 5-10 % Branntkalk zugegeben werden und die silikatreiche Fraktion auf Temperaturen zwischen 43-49°C erwärmt wird. Es bilden sich hierbei neue Hydrate, wodurch eine Mineralbindung des Restwassers erfolgt. Dieses Restwasser kann erst bei Temperaturen jenseits von 130°C wieder ausgetrieben werden. Das entstandene Material kann leicht gebrochen werden, um es mit anderen Materialien zu vermischen, z. B. mit Sand, saurer Erde, Kalk, Gips oder Dünger, um einen Bodenverbesserer herzustellen. Auch eine Verwendung als Zuschlagsstoff für Beton, Keramik und dergleichen ist möglich. Auch hier besteht keine Umweltgefahr mehr durch freisetzbare Natronlauge. Der poröse Ton kann auch als Filtermasse zur Abgasreinigung, Biogasreinigung, Entschwefelung und dergleichen eingesetzt werden. Weiterhin eignet sich die silikatreiche Fraktion als Filtermedium zur Immobilisierung von Schwermetallen und insbesondere von Arsen. Darüber hinaus kann die abgetrennte Schwimmphase (Ton) als Katalysatormasse in einem Biomassereaktor verwendet werden, wobei sie die Teerbildung unterdrückt und die Wasserstoffausbeute bei der Niedertemperatur-Pyrolyse im Temperaturbereich zwischen 230°C und 550°C vorteilhaft erhöht.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zur Wertstoffgewinnung aus einem Bauxitrückstand, welcher durch das Bayer-Verfahren erhältlich oder erhalten ist, umfassend die Schritte:
a) Bereitstellen einer wässrigen Suspension des Bauxitrückstands;
b) Einstellen eines pH-Werts der Suspension auf einen Wert zwischen 7,2 und 12,2 und Zugeben wenigstens eines Dispergiermittels;
c) zumindest teilweises Desagglomerieren suspendierter Mineralagglomerate des Bauxitrückstands, wobei die Mineralagglomerate in Schritt c) durch Erzeugung von Kavitation desagglomeriert werden; und
d) Auftrennen des resultierenden Gemischs in eine eisenreiche Fraktion und in wenigstens eine weitere, vorzugsweise silikatreiche Fraktion.

2. Verfahren nach Anspruch 1,
**dadurch gekennzeichnet, dass**
in Schritt a) ein Verhältnis von Feststoff zu Flüssigkeit zwischen 1:2 und 1:5, insbesondere ein Verhältnis von 1:2,5 in der Suspension eingestellt wird und/oder dass in Schritt a) ein Bauxitrückstand mit einem Wassergehalt zwischen 20 % und 40 % verwendet wird, wobei der Bauxitrückstand vorzugsweise ein- oder mehrfach gewaschen ist:

3. Verfahren nach Anspruch 1 oder 2,
**dadurch gekennzeichnet, dass**
eine Dichte der Suspension auf einen Wert zwischen 1,05 g/cm³ und 1,35 g/cm³, insbesondere zwischen 1,07 g/cm³ und 1,30 g/cm³ eingestellt wird.

4. Verfahren nach einem der Ansprüche 1 bis 3,
**dadurch gekennzeichnet, dass**
die Temperatur der Suspension vor Schritt c), insbesondere in Schritt a), auf einen Wert zwischen 30°C und 70°C eingestellt wird.

5. Verfahren nach einem der Ansprüche 1 bis 4,
**dadurch gekennzeichnet, dass**
der pH-Wert in Schritt b) auf einen Wert zwischen 7,4 und 11,8, insbesondere zwischen 8,4 und 11,5, eingestellt wird.

6. Verfahren nach einem der Ansprüche 1 bis 5,
**dadurch gekennzeichnet, dass**
der in Schritt b) eingestellte pH-Wert während Schritt c) kontinuierlich und/oder stufenweise im Bereich zwischen 7,2 und 12,2 variiert wird.

7. Verfahren nach einem der Ansprüche 1 bis 6,
**dadurch gekennzeichnet, dass**
der pH-Wert durch Zugabe einer Säure und/oder einer Base und/oder einer hydrolysierbaren Verbindung eingestellt wird.

8. Verfahren nach einem der Ansprüche 1 bis 7,
**dadurch gekennzeichnet, dass**
der Suspension vor Schritt c) wenigstens eine Calcium-Verbindung, insbesondere Calciumoxid und/oder Calciumhydroxid und/oder Calciumsulfat, und/oder wenigstens ein Tensid zugesetzt wird.

9. Verfahren nach einem der Ansprüche 1 bis 8,
**dadurch gekennzeichnet, dass**
der Suspension, vorzugsweise vor und/oder während Schritt c), wenigstens ein Trennmittel, insbesondere ein Fließmittel und/oder Partikel, insbesondere Eisenoxidpartikel, zugesetzt wird.

10. Verfahren nach einem der Ansprüche 1 bis 9,
**dadurch gekennzeichnet, dass**
die Kavitation durch wenigstens ein bewegtes Objekt, insbesondere durch einen Dissolver-Rührer, einen Scher-Rührer, ein Laufrad einer Kreiselpumpe, ein Laufrad einer Turbine, einen Rüttler und/oder einen Propeller, erzeugt wird.

11. Verfahren nach einem der Ansprüche 1 bis 10,
**dadurch gekennzeichnet, dass**
die Kavitation durch Beaufschlagung der Suspension mit Ultraschall erzeugt wird.

12. Verfahren nach einem der Ansprüche 1 bis 11,
**dadurch gekennzeichnet, dass**
die weitere Fraktion durch Absaugen und/oder Dekantieren und/oder Filtrieren, insbesondere durch Vakuumfiltrieren, von der eisenreichen Fraktion abgetrennt wird.

13. Verfahren nach einem der Ansprüche 1 bis 12,
**dadurch gekennzeichnet, dass**
der weiteren Fraktion nach dem Abtrennen wenigstens eine Calcium-Verbindung, insbesondere Calciumoxid und/oder Calciumhydroxid und/oder Calciumsulfat, zugesetzt wird.

14. Verfahren nach einem der Ansprüche 1 bis 13,
**dadurch gekennzeichnet, dass**
die Temperatur der weiteren Fraktion nach dem Abtrennen auf einen Wert zwischen 30°C und 70°C eingestellt wird.

15. Vorrichtung (10) zum Durchführen eines Verfahrens nach einem der Ansprüche 1 bis 14, umfassend:
- einen Behälter (16, 20) zur Aufnahme der wässrigen Suspension des Bauxitrückstands;
- eine Einrichtung (24) zum Einstellen des pH-Wertes der wässrigen Suspension;
- eine Einrichtung zum Zugeben eines Dispergiermittels;
- eine Einrichtung (20) zum zumindest teilweisen Desagglomerieren suspendierter Mineralagglomerate des Bauxitrückstands durch Erzeugung von Kavitation; und
- eine Einrichtung (26) zum Auftrennen des resultierenden Gemischs in eine eisenreiche Fraktion und wenigstens eine weitere Fraktion.

## Claims

1. Process for obtaining material of value from a bauxite residue which is obtainable or obtained by the Bayer process, comprising the steps of:
a) providing an aqueous suspension of the bauxite residue;
b) adjusting a pH of the suspension to a value between 7.2 and 12.2 and adding at least one dispersant;
c) at least partially deagglomerating suspended mineral agglomerates of the bauxite residue, wherein the mineral agglomerates are deagglomerated in step c) by generating cavitation; and
d) separating the resulting mixture into an iron-rich fraction and at least one further, preferably silicate-rich fraction.

2. Process according to claim 1,
**characterized in that**
in step a) a ratio of solid to liquid between 1:2 and 1:5, in particular a ratio of 1:2.5 is set in the suspension
and/or **in that** in step a) a bauxite residue with a water content between 20% and 40% is used, wherein the bauxite residue is preferably washed once or multiple times.

3. Process according to claim 1 or 2,
**characterized in that**
a density of the suspension is adjusted to a value between 1.05 g/cm³ and 1.35 g/cm³, in particular between 1.07 g/cm³ and 1.30 g/cm³.

4. Process according to one of claims 1 to 3,
**characterized in that**
the temperature of the suspension is adjusted to a value between 30°C and 70°C before step c), in particular in step a).

5. Process according to one of claims 1 to 4,
**characterized in that**
in step b) the pH is adjusted to a value between 7.4 and 11.8, in particular between 8.4 and 11.5.

6. Process according to one of claims 1 to 5,
**characterized in that**
during step c) the pH adjusted in step b) is varied continuously and/or stepwise in the range between 7.2 and 12.2.

7. Process according to one of claims 1 to 6,
**characterized in that**
the pH is adjusted by addition of an acid and/or a base and/or a hydrolyzable compound.

8. Process according to one of claims 1 to 7,
**characterized in that**
at least one calcium compound, in particular calcium oxide and/or calcium hydroxide and/or calcium sulfate, and/or at least one surfactant, is added to the suspension before step c).

9. Process according to one of claims 1 to 8,
**characterized in that**
at least one separating agent, in particular a solvent and/or particles, in particular iron oxide particles, is added to the suspension, preferably before and/or during step c).

10. Process according to one of claims 1 to 9,
**characterized in that**
the cavitation is generated by at least one moved object, in particular by a dissolver stirrer, a shear stirrer, a rotor of a rotary pump, a rotor of a turbine, a shaker and/or a propeller.

11. Process according to one of claims 1 to 10,
**characterized in that**
the cavitation is generated by applying ultrasound to the suspension.

12. Process according to one of claims 1 to 11,
**characterized in that**
the further fraction is separated from the iron-rich fraction by suction and/or decanting and/or filtering, in particular by vacuum filtering.

13. Process according to one of claims 1 to 12,
**characterized in that**
at least one calcium compound, in particular calcium oxide and/or calcium hydroxide and/or calcium sulfate, is added to the further fraction after the separation.

14. Process according to one of claims 1 to 13,
**characterized in that**
the temperature of the further fraction is adjusted to a value between 30°C and 70°C after the separation.

15. Apparatus (10) for carrying out a process according to one of claims 1 to 14, comprising:
- a container (16, 20) for receiving the aqueous suspension of the bauxite residue;
- a device (24) for adjusting the pH of the aqueous suspension;
- a device for adding a dispersant;
- a device (20) for at least partially deagglomerating suspended mineral agglomerates of the bauxite residue by generating cavitation; and
- a device (26) for separating the resulting mixture into an iron-rich fraction and at least one further fraction.

## Revendications

1. Procédé pour l'obtention de matières valorisables à partir d'un résidu de bauxite obtenu ou pouvant être obtenu au travers du procédé de Bayer, comprenant les étapes suivantes :
a) mise à disposition d'une suspension aqueuse du résidu de bauxite ;
b) ajustement d'une valeur de pH de la suspension à une valeur comprise entre 7,2 et 12,2 et ajout d'au moins un agent disperseur ;
c) désagglomération au moins partielle des agglomérats minéraux en suspension du résidu de bauxite, les agglomérats minéraux étant désagglomérés à l'étape c) par production de cavitation ; et
d) séparation du mélange résultant en une fraction à forte teneur en fer et en au moins une fraction supplémentaire, de préférence à forte teneur en silicate.

2. Procédé selon la revendication 1, **caractérisé en ce qu'**à l'étape a), un rapport de matière solide sur fluide dans la suspension est ajusté pour atteindre une valeur comprise entre 1:2 et 1:5, notamment de 1:2,5 et/ou à l'étape a), un résidu de bauxite est utilisé avec une teneur en eau comprise entre 20 % et 40 %, le résidu de bauxite étant de préférence lavé à une ou plusieurs reprises.

3. Procédé selon la revendication 1 ou 2, **caractérisé en ce qu'**une masse volumique de la suspension est ajustée à une valeur comprise entre 1,05 g/cm³ et 1,35 g/cm³, notamment entre 1,07 g/cm³ et 1,30 g/cm³.

4. Procédé selon l'une quelconque des revendications 1 à 3, **caractérisé en ce que** la température de la suspension est ajustée avant l'étape c), notamment à l'étape a), à une valeur comprise entre 30 °C et 70 °C.

5. Procédé selon l'une quelconque des revendications 1 à 4, **caractérisé en ce que** la valeur de pH est ajustée à l'étape b) à une valeur comprise entre 7,4 et 11,8, notamment entre 8,4 et 11,5.

6. Procédé selon l'une quelconque des revendications 1 à 5, **caractérisé en ce qu'**à l'étape c), la valeur de pH ajustée à l'étape b) est modifiée en continu et/ou par paliers dans la plage comprise entre 7,2 et 12,2.

7. Procédé selon l'une quelconque des revendications 1 à 6, **caractérisé en ce que** la valeur de pH est ajustée par ajout d'un acide et/ou d'une base et/ou d'une liaison hydrolysable.

8. Procédé selon l'une quelconque des revendications 1 à 7, **caractérisé en ce que** l'on ajoute à la suspension avant l'étape c) au moins une liaison calcium, notamment de l'oxyde de calcium et/ou de l'hydroxyde de calcium et/ou du sulfate de calcium et/ou au moins un agent tensioactif.

9. Procédé selon l'une quelconque des revendications 1 à 8, **caractérisé en ce que** l'on ajoute à la suspension, de préférence avant et/ou pendant l'étape c), au moins un agent séparateur, notamment un solvant et/ou des particules, notamment des particules d'oxyde de fer.

10. Procédé selon l'une quelconque des revendications 1 à 9, **caractérisé en ce que** la cavitation est produite par au moins un objet déplacé, notamment par un agitateur par dissolution, un agitateur par cisaillement, un rotor de pompe centrifuge, un rotor de turbine, un vibrateur et/ou une hélice.

11. Procédé selon l'une quelconque des revendications 1 à 10, **caractérisé en ce que** la cavitation est produite par application d'ultrasons à la suspension.

12. Procédé selon l'une quelconque des revendications 1 à 11, **caractérisé en ce que** la fraction supplémentaire est séparée par extraction et/ou décantage et/ou filtration, notamment par filtration à vide, de la fraction à forte teneur en fer.

13. Procédé selon l'une quelconque des revendications 1 à 12, **caractérisé en ce qu'**au moins une liaison de calcium, notamment de l'oxyde de calcium et/ou de l'hydroxyde de calcium et/ou du sulfate de calcium, est ajoutée à la fraction supplémentaire après la séparation.

14. Procédé selon l'une quelconque des revendications 1 à 13, **caractérisé en ce que** la température de la fraction supplémentaire est ajustée à une valeur comprise entre 30 °C et 70 °C après la séparation.

15. Dispositif (10) de mise en œuvre d'un procédé selon l'une quelconque des revendications 1 à 14, comprenant :
- un récipient (16, 20) permettant de recevoir la suspension aqueuse du résidu de bauxite ;
- un dispositif (24) d'ajustement de la valeur de pH de la suspension aqueuse ;
- un dispositif d'ajout d'un agent disperseur ;
- un dispositif (20) de désagglomération au moins partielle des agglomérats minéraux en suspension du résidu de bauxite par production de cavitation ; et
- un dispositif (26) de séparation du mélange résultant en une fraction à forte teneur en fer et au moins en une fraction supplémentaire.
